Europäisches Patentamt

European Patent Office

Office européen des brevets

(11) Publication number: **0 117 735**
**A1**

# EUROPEAN PATENT APPLICATION

(21) Application number: **84301197.4**

(22) Date of filing: **24.02.84**

(51) Int. Cl.³: **G 06 F 1/00**

(30) Priority: **28.02.83 US 470040**

(43) Date of publication of application: **05.09.84**
**Bulletin 84/36**

(84) Designated Contracting States: **AT BE CH DE FR GB IT LI NL SE**

(71) Applicant: **DEERE & COMPANY, 1 John Deere Road, Moline Illinois 61265 (US)**

(72) Inventor: **Boe, Thomas Eugene, Route 4, Cedar Falls Iowa 506113 (US)**

(74) Representative: **Pears, David Ashley et al, REDDIE & GROSE 16 Theobalds Road, London WC1X 8PL (GB)**

(54) **Computer control system.**

(57) A control system is implemented by a microprocessor (12) controlled by a program stored in a read-only memory (18). A main algorithm is performed repetitively to process values from sensors (23) and control actuators (25) correspondingly. Working values are stored in a random access memory (16) and, when the system is first switched on, certain working values are initialised from values stored in the read-only memory (18). There is then a training period during which the initial values converge to more appropriate values. In order to eliminate the training period, the memory (16) is rendered non-volatile by a dedicated back-up battery (20). The initialization routine also sets a flag value in the memory (16). When this flag value is present on switching on, the initialization routine is by-passed. If the flag value is not found on switching on, e.g. because the back-up battery (20) has failed, the initialization routine is performed again.

ACTORUM AG

## COMPUTER CONTROL SYSTEM

The present invention relates to a control system with a stored program digital computer and a memory associated therewith.

It is known to provide a vehicle with a control system implemented by a stored program digital computer (micorprocessor), such as the hitch control system described in U.S. Patent No. 4,013,875. Such a microprocessor-based system may include a programmable read only memory (PROM) for storing factory programmed, non-changing values and a random access (read-write) memory (RAM) for storing working values which are recalculated during operation of the system. It is known to initialize certain of these working values to values stored in PROM when the system is switched on. The system then goes through a training period in which repeated performance of the control algorithm causes the working values to converge from the initial values to more appropriate working values.

A disadvantage of this known system is that the training period has to be gone through every time the system is switched on before the system is operating stably. This is because the training period duration is determined not by the speed of the computer but by mechanical response times.

The object of the present invention is to overcome this disadvantage.

According to the present invention, there is provided a control system wherein a control algorithm is implemented by a digital computer utilizing data stored in a first memory and comprising a second memory for storing initial data values which are written into the first memory when the system is switched on, characterised in that the first memory is a non-volatile memory which also stores a flag value (BATTRY) which is set to a predetermined state when the initial data values are written into the first memory from the second memory and in that the digital computer bypasses the operation of writing the initial data values from the second memory to the first memory when the flag value (BATTRY) exhibits the predetermined state when the system is switched on.

In a sensor-based control system, there may be certain values, such as sensor calibration values, which must be updated during operation in the field.but which remain relatively stable over long periods of use.    Such values can be stored in a non-volatile RAM which retains its data even when the system as a whole is switched off.    However, a non-volatile RAM can lose its contents, e.g. from failure or momentary disconnection of a RAM back-up battery, even though the memory remains inherently functional.

The present invention makes it possible to eliminate lengthy training periods by nomally retaining calculated working values in non-volatile RAM even when the system is switched off. On the other hand, loss of such data is dealt with effectively by detecting that the stored flag value has been lost and initialization from the PROM is then automatically called for. Even if the back-up battery has failed completely, the system will remain operative because the RAM will be energised from the main power supply on switch-on and will be initialized from the PROM every time the system is switched on.

The preferred embodiment of the invention includes a microprocessor coupled via a data bus to a programmable read only memory (PROM), to a random access memory (RAM), and to various input/output devices.    The RAM is made non-volatile by a dedicated battery power supply.    The microprocessor is programmed to set certain variables used in a main control algorithm to values stored in the PROM only upon initial start-up of the control system or upon subsequent start-up if there has been a loss of contents of the RAM.

A more detailed description will now be given, by way of example, with reference to the drawings, in which:

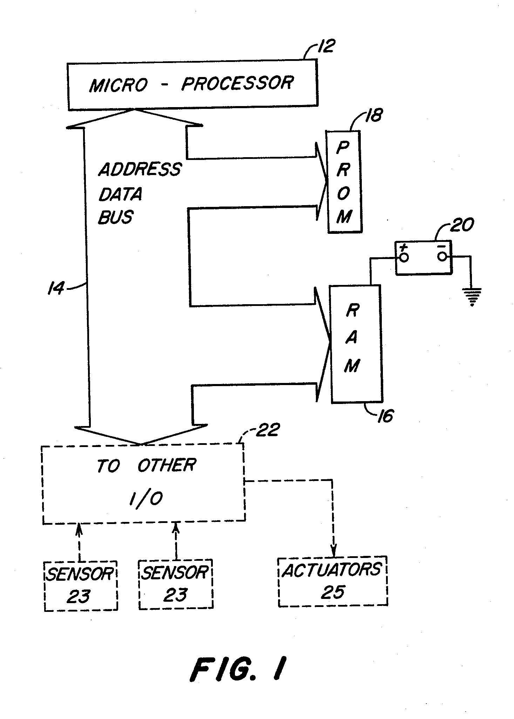

Figure 1  is a simplified block diagram of the components of the present invention;   and

Figure 2 is a flow chart of the routine performed by the microprocessor.

A microprocessor-based control system 10 includes a microprocessor 12 which is coupled via data bus 14 to a random access memory (RAM) 16 and to a programmable read-only memory (PROM) 18. Preferably, the RAM is non-volatile by reason of its dedicated power supply provided by battery 20. The data bus 14 is also coupled to the appropriate input and output devices 22, such as conventional A/D and D/A converters (not shown), multiplexers (not shown), control system input parameter sensors 23, and controlled function actuators 25. These devices may be varied, depending upon the system which is to be controlled, and form no part of the present invention.

The PROM 18 stores certain values, such as default initialization values, the use of which will be explained later. The non-volatile RAM 16 stores various values which are calculated and used during operation of a control algorithm. The particular control algorithm forms no part of the present invention, but it suffices to mention that the particular values stored in RAM 16 would vary, depending upon the particular control algorithm which is used. In addition, a memory status or flag value, for example, BATTRY = 10101010, is also stored in the RAM 16 for use in the memory failure detect procedure described below.

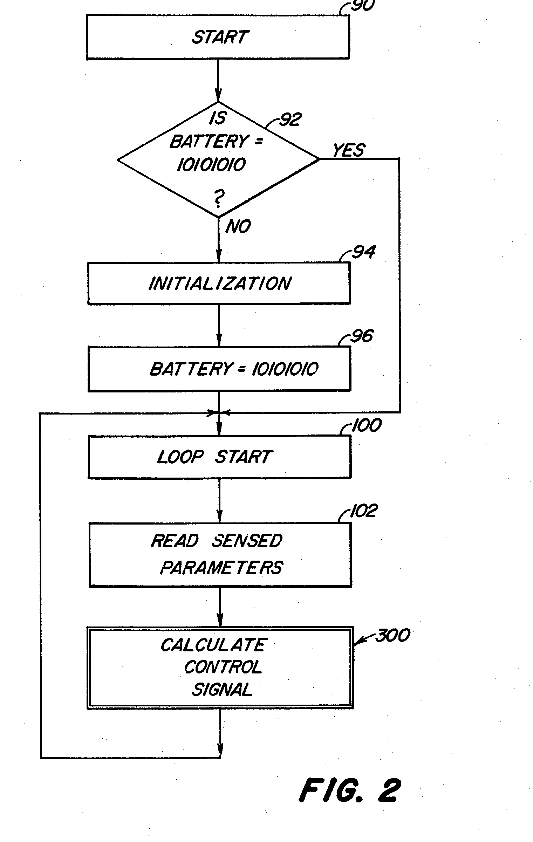

The invention is implemented by executing the procedure illustrated by the flow chart shown in Figure 2, which starts at step 90. Then, in step 92, the BATTRY value in RAM 16 is compared to a chosen value, which is the binary number 10101010 in the example given. Prior to the initial execution of step 92, the BATTRY value will have been established at some value other than binary 10101010, typically 00000000, so that step 92 initially directs the algorithm to step 94.

In step 94, various values, such as control set point or reference values, or filtered sensor input values, may be initialized to desired preset initial values, by writing these values from the PROM 18 to the RAM 16. Then, in step 96, the BATTRY value is set equal to 10101010, so that the next time through the routine, step 92 will direct the routine directly to step 100 where the main control loop begins.    In any case, step 100 may be entered following step 96, whereafter, in step 102, the values the input parameter sensors 23 may be read.    Then, the main control algorithm 300 may be executed.    The control algorithm generates control signals as a function of various set point and sensed input values.    These control signals are communicated via data bus 14 to appropriate function actuators 25.    Upon execution of the main control algorithm 300, the loop returns to loop start step 100, whereupon the sensed input values are updated in step 102 before the main control algorithm 300 is repeated.    This loop involving steps 100, 102 and main control algorithm is repeated until the control system is turned off.

When the control system is restarted, step 90 is entered and then step 92 examines the BATTRY value.    If the RAM 16 has not lost its contents, then the routine will be directed to step 100 and the main control algorithm 300 will be executed utilizing the set point and reference values established and stored in the RAM 16 during previous operation of the control system.    In this case, the control system can, upon restarting, immediately begin operating using the previously determined set point and reference values, without having those values redetermined from the initialization values stored in the PROM 18 by repeated interactions of steps 100, 102 and the main control algorithm 300.

However, if there has been a fault which has wiped out the contents of the non-volatile RAM 16, then step 92 will direct the routine to the initialization step 94, as previously described, so that the set point and reference values lost from the RAM 16 can be reinitialized by the values stored in the PROM 18.    In this manner, the invention detects and takes appropriate action in response to loss of contents of the non-volatile RAM 16.    This eliminates the need for time-consuming itterative redetermination of the set point and reference values based on the initialization values stored in PROM 18.

The conversion of the above-described flow chart into a standard language for implementing the algorithm described by the flow chart in a digital data processor, such as a microprocessor, will be evident to those with ordinary skill in the art.

0117735

- 6 -

CLAIMS

1.    A control system wherein a control algorithm is implemented by a digital computer (12) utilizing data stored in a first memory (16) and comprising a second memory (18) for storing initial data values which are written into the first memory when the system is switched on, characterised in that the first memory (16) is a non-volatile memory which also stores a flag value (BATTRY) which is set to a predetermined state when the initial data values are written into the first memory (16) from the second memory (18) and in that the digital computer (12) bypasses the operation of writing the initial data values from the second memory (18) to the first memory (16) when the flag value (BATTRY) exhibits the predetermined state when the system is switched on.

2.    A control system according to claim 1, characterised in that the second memory (18) is a read-only memory.

3.    A control system according to claim 1 or 2, characterised in that the first memory (16) is rendered non-volatile by a dedicated battery (20) supplying only the first memory.

FIG. 1

**FIG. 2**

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | PATENTS ABSTRACTS OF JAPAN, vol. 7, no. 48 (P-178)[1193], 24th February 1983; & JP - A - 57 196 327 (TATEISHI DENKI K.K.) 02-12-1982 * Abstract * | 1-3 | G 06 F 1/00 |
| X | PATENTS ABSTRACTS OF JAPAN, vol. 6, no. 225 (P-154)[1103], 10th November 1982; & JP - A - 57 127 220 (FUJITSU K.K.) 07-08-1982 * Abstract * | 1-3 | |
| Y | EP-A-0 027 432 (INDESIT INDUSTRIA ELETTRODOMESTICI ITALIANA S.p.A.) * Page 5, line 17 - page 8, line 1 * | 1-3 | |
| Y | EP-A-0 042 649 (N.V. PHILIPS' GLOEILAMPENFABRIEKEN) * Page 12, line 25 - page 13, line 33; figure 3 * | 1-3 | TECHNICAL FIELDS SEARCHED (Int. Cl. ³) G 06 F 1/00 |
| A | FR-A-2 414 755 (NISSAN MOTOR CO. LTD.) * Page 3, line 11 - page 4, line 19; figure 1 * | 1-3 | |

The present search report has been drawn up for all claims

| Place of search THE HAGUE | Date of completion of the search 12-06-1984 | Examiner HAZEL J.F. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82